# EUROPÄISCHE PATENTSCHRIFT

(11) **EP 1 559 943 B1**
(45) Veröffentlichungstag und Bekanntmachung des Hinweises auf die Patenterteilung: **14.11.2007**
(21) Anmeldenummer: 05103012.0
(22) Anmeldetag: 18.09.2002
(51) Int. Cl.: F16L 37/092, F16L 33/22

(54) **Anschlussvorrichtung für Strömungsmittel-Leitungen**
Connector for for fluid pipes
Dispositif de raccord pour tuyaux pour fluide

(30) Priorität: 19.09.2001 DE 20115436 U
(43) Veröffentlichungstag der Anmeldung: 03.08.2005
(62) Teilanmeldung aus: 02020599.3
(73) Patentinhaber: Voss Automotive GmbH, 51688 Wipperfürth (DE)
(72) Erfinder: Salomon-Bahls, Bernd, 58553 Halver (DE); Hagen, Harald, 51688 Wipperfürth (DE); Kaminski, Volker, 58553 Halver (DE); Hester, Hilmar, 51688 Wipperfürth (DE)
(74) Vertreter: Patentanwälte Dr. Solf & Zapf

(56) Entgegenhaltungen:
- EP-A- 0 940 620
- CH-A- 189 706
- DE-C- 10 022 893
- US-A- 5 785 358
- US-A- 5 924 746

## Beschreibung

Die vorliegende Erfindung betrifft eine Anschlußvorrichtung für eine Strömungsmittel-Leitung, bestehend aus einem Aufnahmeteil mit einer Stecköffnung zum Einstecken eines Leitungs-Steckabschnittes und Haltemitteln zum Arretieren des eingesteckten Steckabschnittes in der Stecköffnung.

Eine derartige Anschlußvorrichtung bzw. "Steckarmatur" ist beispielsweise durch die DE 100 35 791 A1 bekannt geworden. Bei solchen Vorrichtungen kann es in der Praxis ― vor allem bei ungünstigen, z. B. engen oder schlecht zugänglichen Einbausituationen ― zu Problemen dahingehend kommen, dass der Anwender/Monteur den Steckabschnitt womöglich nicht korrekt, d. h. nicht tief genug einsteckt, ohne dies aber zu bemerken. In der Folge führt dies zu Undichtigkeiten oder sogar zu einem vollständigen Lösen der Leitung nach Beaufschlagung mit dem Strömungs-bzw. Druckmedium.

EP-A-0940620 offenbart eine Anschlussvorrichtung mit den Merkmalen des Oberbegriffs des Anspruchs 1.

Der vorliegenden Erfindung liegt die Aufgabe zugrunde, eine solche gattungsgemäße Anschlußvorrichtung zu schaffen, die eine erhöhte Montage- und Anwendungssicherheit gewährleistet.

Erfindungsgemäß wird dies durch ein in der Stecköffnung derart gelagertes Indikatorelement erreicht, das beim Einstecken des Steckabschnittes bei Erreichen einer bestimmten Mindest-Steckstellung, in der eine hinreichende Arretierung und Abdichtung des Steckabschnittes gewährleistet sind, selbsttätig eine von außen wahrnehmbare Zustandsänderung des Indikatorelementes erfolgt.

Das erfindungsgemäße Indikatorelement ermöglicht somit ein sehr sicheres Einstecken, indem der Anwender/Monteur von außen genau erkennt, wann die korrekte Mindest-Steckstellung erreicht ist. Dadurch werden Undichtigkeiten und Funktionsausfälle mit hoher Sicherheit vermieden.

Vorteilhafte Ausgestaltungsmerkmale und weitere Vorteile der Erfindung sind in den Unteransprüchen sowie der folgenden Beschreibung enthalten.

Anhand von mehreren, in der Zeichnung veranschaulichten, bevorzugten Ausführungsbeispielen soll die Erfindung genauer erläutert werden. Dabei zeigen:
- Fig. 1: eine erste Ausführungsform einer Anschlußvorrichtung im Längsschnitt vor dem bzw. beim Einstecken des Steckabschnittes,
- Fig. 2: einen Querschnitt II-II gemäß Fig. 1,
- Fig. 3: eine Ansicht analog zu Fig. 1, jedoch in der Mindest-Steckstellung,
- Fig. 4: einen Querschnitt IV-IV gemäß Fig. 3,
- Fig. 5: eine gesonderte Darstellung eines Indikatorelementes in einer axialen Ansicht entsprechend Pfeilrichtung V gemäß Fig. 1 bzw. 6,
- Fig. 6: einen Schnitt durch das Indikatorelement in der Ebene VI-VI gemäß Fig. 5,
- Fig. 7: einen Querschnitt in der Ebene VII-VII gemäß Fig. 6,
- Fig. 8: einen Längsschnitt durch eine Ausführungsform der erfindungsgemäßen Anschlußvorrichtung, wobei in der linken Hälfte (Fig. 8a) die Mindest-Steckstellung und in der rechten Figurenhälfte (Fig.8b) der Zustand vor Erreichen der Mindest-Steckstellung veranschaulicht sind,
- Fig. 9: eine gesonderte Längsschnittdarstellung eines zusätzlichen Zwischenelementes zur Betätigung des Indikatorelementes,
- Fig. 10: eine gesonderte Schnittansicht des Indikatorelementes entsprechend der Ansicht gemäß Fig. 8 (Schnitt X-X gemäß Fig. 11),
- Fig. 11: eine axiale Ansicht in Pfeilrichtung XI gemäß Fig. 10,
- Fig. 12: einen Querschnitt in der Ebene XII-XII gemäß Fig. 10,
- Fig. 13: einen Halb-Längsschnitt durch eine andere Ausführungsform einer Anschlußvorrichtung in der Mindest-Steckstellung,
- Fig. 14: eine Ansicht wie in Fig. 13, jedoch vor Erreichen der Mindest-Steckstellung,
- Fig. 15: eine gesonderte Schnittansicht des Indikatorelementes gemäß Fig. 13 und 14 (Schnitt XV-XV gemäß Fig. 16),
- Fig. 16: eine axiale Ansicht in Pfeilrichtung XVI gemäß Fig. 15,
- Fig. 17: einen Querschnitt in der Ebene XVII-XVII gemäß Fig. 15,
- Fig. 18: eine andere Ausführungsform einer Anschlußvorrichtung in einer Darstellung analog zu Fig. 13,
- Fig. 19: eine weitere Darstellung der Ausführung nach Fig. 18 in der Stellung analog zu Fig. 14 und
- Fig. 20: eine gesonderte Darstellung des Indikatorelementes gemäß Fig. 18 und 19 in einer halbgeschnittenen Seitenansicht.

In den verschiedenen Figuren der Zeichnung sind gleiche Teile stets mit den gleichen Bezugszeichen versehen und brauchen daher in der Regel auch jeweils nur einmal beschrieben zu werden.

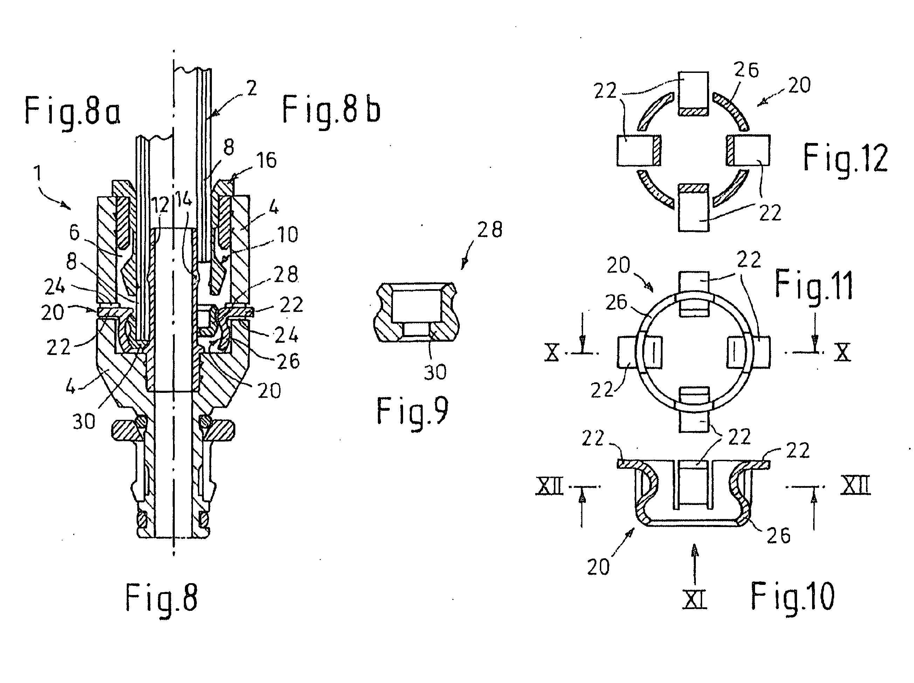

Eine erfindungsgemäße Anschlußvorrichtung 1 (Fig. 8 bis Fig. 12) dient zum schnellen und insbesondere lösbaren Anschluß (mindestens) einer Strömungsmittel- bzw. Druckmittel - Leitung 2 (Rohr- oder Schlauchleitung). Dazu besteht die Anschlußvorrichtung im Wesentlichen aus einem Aufnahmeteil 4 mit (mindestens) einer Stecköffnung 6 zum Einstecken eines Leitungs-Steckabschnittes 8 sowie aus Haltemitteln 10 zum Arretieren des eingesteckten Steckabschnittes 8 in der Stecköffnung 6 in einer abgedichteten Position.

Mit Vorteil ist innerhalb des Aufnahmeteils 4 eine innere, koaxiale Stützhülse 12 angeordnet, die einendig so in dem Aufnahmeteil 4 befestigt ist, dass sie sich zentrisch durch die Stecköffnung 6 erstreckt, um zur radialen Abstützung in den eingesteckten Steckabschnitt 8 einzugreifen. Dadurch kann der Steckabschnitt 8 vorteilhafterweise unmittelbar von einem Ende der Leitung 2 gebildet sein. Es liegt aber im Bereich der Erfindung, den Steckabschnitt 8 als zusätzliches, gesondert mit der Leitung 2 zu verbindendes Einzelteil vorzusehen.

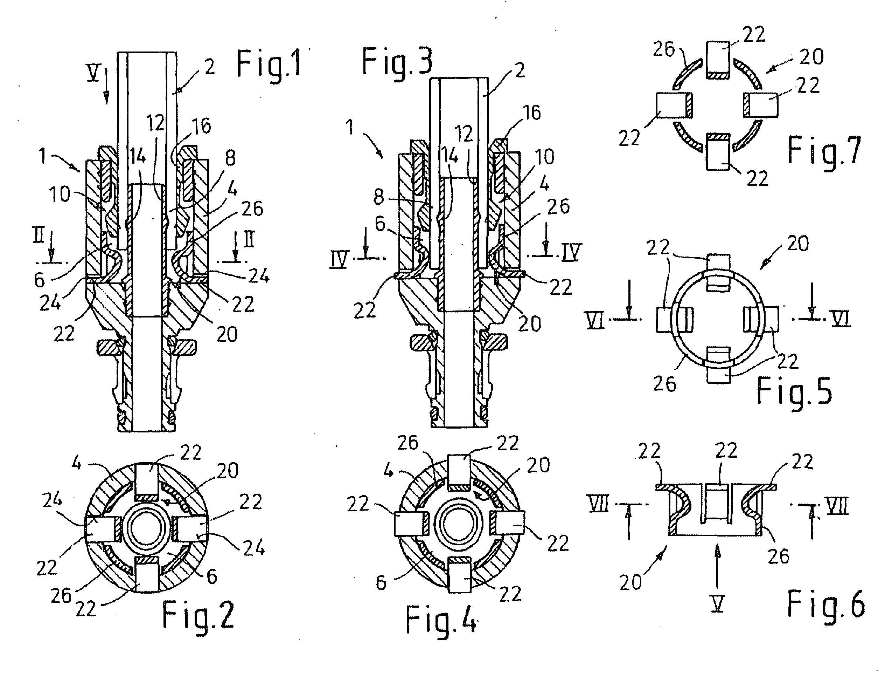

Zur Abdichtung ist bei den dargestellten Ausführungsformen nach Fig. 1 bis Fig. 14 vorgesehen, dass als Dichtmittel die Stützhülse 12 in ihrem in den Steckabschnitt 8 eingreifenden Bereich einen äußeren Ringwulst 14 aufweist. Die zur mechanischen Halterung des eingesteckten Steckabschnittes 8 vorgesehenen Haltemittel 10 können - wie dargestellt - von einem hülsenartigen, den Steckabschnitt 8 umschließenden Spannelement 16 nach Art einer Spannzange bzw. Spannfutters gebildet sein.

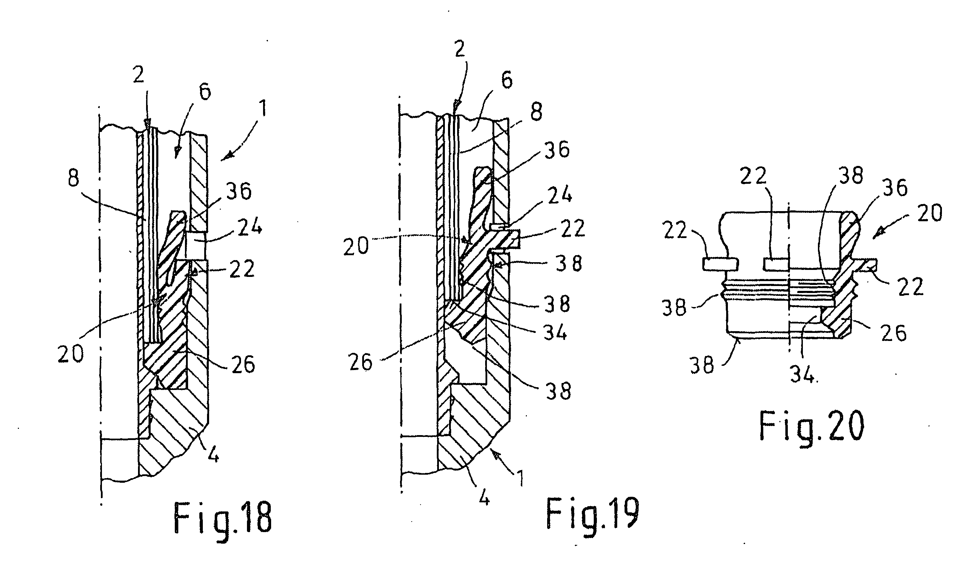

Die Anschlußvorrichtung 1 weist ein Indikatorelement 20 auf. Dieses Indikatorelement 20 ist in der Stecköffnung 6 derart gelagert und dabei derart ausgebildet, dass beim Einstecken des Steckabschnittes 8 bei Erreichen einer bestimmten Mindest-Steckstellung, in der eine hinreichende Arretierung und Abdichtung des Steckabschnittes 8 gewährleistet sind, selbsttätig eine von außen wahrnehmbare Zustandsänderung des Indikatorelementes 20 erfolgt. Dazu ist das Indikatorelement 20 durch das Einstecken des Steckabschnittes 8 verformbar und/oder in seiner Lage ver änderbar. Das Indikatorelement 20 weist mindestens einen Kontrollabschnitt 22 auf, der derart beweglich in einer aus der Stecköffnung 6 etwa radial nach außen führenden Queröffnung 22 des Aufnahmeteils 4 angeordnet ist, dass er in einer ersten Stellung mit einem freien Ende die Außenkontur des Aufnahmeteils 4 aus der Queröffnung 24 heraus nach außen überragt. In einer zweiten Stellung liegt der Kontrollabschnitt 22 vollständig innerhalb der Außenkontur des Aufnahmeteils 4, und zwar gänzlich innerhalb der Queröffnung 24 (vgl. Fig. 1, 8a und 13) oder sogar vollständig zurückgezogen innerhalb der Stecköffnung 6 (vgl. dazu Fig. 18).

In den dargestellten Ausführungsbeispielen besteht das Indikatorelement 20 aus einem in der Stecköffnung 6 gelagerten Basisring 26 und insbesondere mehreren, z. B. vier, gleichmäßig über den Umfang verteilt angeordneten Kontrollabschnitten 22. Vorzugsweise ist das Indikatorelement 20 mit dem Basisring 26 und den Kontrollabschnitten 22 als einstückiges Formteil insbesondere aus einem elastischen Material ausgebildet. Geeignet ist insbesondere ein Kunststoff-Elastomer, aber auch Metall (Federstahlblech).

Abgesehen von der erfindungsgemäßen Ausführung nach Fig. 8 bis 12 wird das Indikatorelement 20 für seine Zustandsänderung von dem Steckabschnitt 8 unmittelbar betätigt. Gemäß Fig. 8 bis 12 ist ein zusätzliches, ringförmiges Zwischenelement 28 vorgesehen, wobei beim Einstecken des Steckabschnittes 8 das Zwischenelement 28 und über dieses mittelbar das Indikatorelement 20 betätigt wird.

Bei der Ausführungsform nach Fig. 1 bis 7 sitzt das Indikatorelement 20 über den Basisring 26 zentriert in der Stecköffnung 6. Die Kontrollabschnitte 22 verlaufen ausgehend von dem Basisring 26 derart bogenförmig in jeweils eine der Queröffnungen 24, dass sie vor dem Einstecken des Steckabschnittes 8 mit einem etwa mittleren Abschnitt radial in dem Bereich der Stecköffnung 6 liegen, in den dann der Steckabschnitt 8 eingreift. Auf diese Weise gelangt der Steckabschnitt 8 beim Einstecken unmittelbar zur Anlage an den Kontrollabschnitten 22, so dass diese mit ihren freien Enden radial nach außen durch die Queröffnungen 24 geschoben werden. Somit handelt es sich bei dieser Ausführung nach Fig. 1 bis 7 bei der oben beschriebenen ersten Stellung um eine die Mindest-Steckstellung anzeigende Signalstellung (Fig. 3) und bei der zweiten Stellung um die in Fig. 1 dargestellte Ausgangsstellung vor dem Einstecken des Steckabschnittes 8. In der Signalstellung gemäß Fig. 3 stehen somit die Kontrollabschnitte 22 mit ihren Enden aus den Queröffnungen 24 vor, was zu einer deutlich sichtbaren sowie auch manuell fühlbaren Wahrnehmbarkeit führt.

Bei allen übrigen Ausführungsformen ist eine umgekehrte Variante vorgesehen, wobei die vorstehende erste Stellung die Ausgangsstellung vor einem ersten Einstecken des Steckabschnittes 8 und die zweite Stellung die die Mindest-Steckstellung anzeigende, zurückgezogene Signalstellung sind. Diese Lösung hat den Vorteil, dass in der Gebrauchsstellung die Kontrollabschnitte 22 mit ihren Endkanten nicht aus den Queröffnungen 24 vorstehen. Somit wird durch Vermeidung überstehender Kanten eine erhöhte Unfallsicherheit erreicht.

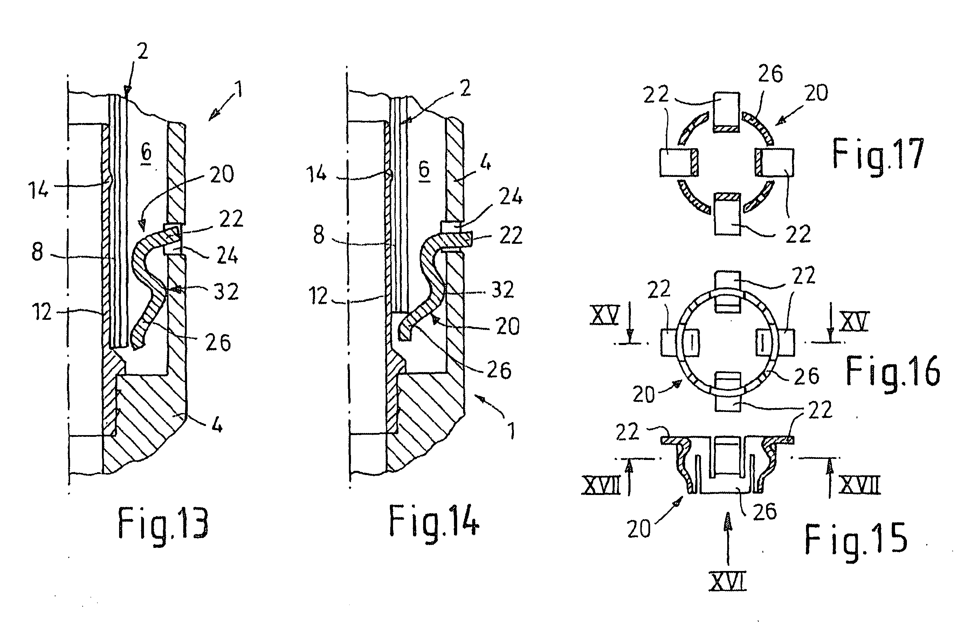

Bei den Ausführungen nach Fig. 1 bis 7 einerseits und Fig. 13 bis 17 andererseits ist das Indikatorelement 20 vorteilhafterweise derart elastisch ausgebildet und/oder derart gelagert, dass es nach einem Lösen und Entnehmen des Steckabschnittes 8 wieder selbsttätig in seine andere Stellung wechselt. Diese Varianten sind somit auch für mehrfaches Stecken bei voll funktionsfähigem Steck-Indikatorelement 20 geeignet, da das Indikatorelement 20 beim Entfernen des Steckabschnittes 8 selbsttätig in die Ausgangsposition zurückfedert.

Bei den übrigen Ausführungen nach Fig. 8 bis 12 und Fig. 18 bis 20 verbleibt das Indikatorelement 20 nach einem Entfernen des Steckabschnittes 8 im Wesentlichen unverändert in seiner Signalstellung und müßte daher für ein wiederholtes Stecken manuell aus der Signalstellung wieder in die steckbereite Ausgangsstellung gebracht werden.

Bei der erfindungsgemäßen Ausführung nach Fig. 8 bis 12 sitzt das Indikatorelement 20 ebenfalls zentriert mit dem Basisring 26 in der Stecköffnung 6. Im Bereich der Kontrollabschnitte 22 ist durch die Materialeigenschaften und Formgebung eine radial nach innen gerichtete Vorspannung vorhanden. In der Ausgangsstellung nach Fig. 8b werden aber gegen diese Vorspannung durch das ringförmige Zwischenelement 28 die Kontrollabschnitte 22 in ihrer durch die Queröffnungen 22 nach außen ragenden Stellung gehalten. Wird dann der Steckabschnitt 8 eingesteckt, so gelangt dieser zur Anlage an einem sich radial nach innen erstreckenden Ringsteg 30 des Zwischenelementes 28, so dass bei weiterem Einstecken eine Mitnahme des Zwischenelementes 28 erfolgt. Dadurch werden gemäß Fig. 8a die Kontrollabschnitte 22 freigegeben, so dass sie sich durch die Vorspannung radial nach innen in ihre zurückgezogene Signalstellung bewegen können.

Bei der Variante nach Fig. 13 bis 17 ist das Indikatorelement 20 derart elastisch ausgebildet und geformt, dass in der Ausgangsstellung die Kontrollabschnitte 22 selbsttätig allein durch eine radial nach außen wirkende Vorspannung durch die Queröffnungen 24 nach außen gedrängt werden. Das Indikatorelement 20 sitzt dabei mit einem etwa mittleren, bogenartigen Abschnitt 32 zentriert in der Stecköffnung 6. Ausgehend von diesem etwa mittleren Abschnitt 32 erstreckt sich der Basisring 26 schräg radial nach innen, und zwar so weit, dass der eingesteckte Steckabschnitt 8 an dem Basisring 26 zur Anlage gelangen kann. Durch diese Anlage erfolgt beim Einstecken eine Art Verdrehung bzw. Verwindung des Indikatorelementes 20 um den praktisch als Drehpunkt wirkenden mittleren Abschnitt 32, so dass die Kontrollabschnitte 22 aus ihrer Ausgangslage gemäß Fig. 14 in die Signalstellung gemäß Fig. 13 zurückgezogen werden. Diese Bewegung ist durch die Elastizität des Indikatorelementes 20 nach Entnahme des Steckabschnittes 8 vorteilhafterweise reversibel.

Was schließlich noch die Ausführung nach Fig. 18 bis 20 betrifft, so ist dabei das Indikatorelement 20 vorteilhafterweise so ausgebildet, dass es zusätzlich auch eine Dichtungsfunktion zwischen Aufnahmeteil 4 und Steckabschnitt 8 erfüllt. Somit handelt es sich um ein "Multifunktionselement", welches vorzugsweise als Profilformteil aus einem elastischen Werkstoff, vorzugsweise aus NBR oder FKM, ausgebildet ist. Gemäß Fig. 20 sind die Kontrollabschnitte 22 als radiale, fingerartige Ansätze an dem Basisring 26 angeformt. Der Basisring 26 weist einen sich radial nach innen erstreckenden Ringsteg 34 zur stirnseitigen Anlage des Steckabschnittes 8 auf. In der Ausgangsstellung nach Fig. 19 sitzt dieses Indikatorelement 20 unter leichter Vorspannung so in einem Bereich der Stecköffnung 6, dass sich die Kontrollabschnitte 22 geradlinig radial nach außen durch die Queröffnungen 24 erstrecken. Wird dann gemäß Fig. 18 der Steckabschnitt 8 eingesteckt, so wird durch stirnseitige Anlage an dem Ringsteg 34 das ge samte Indikatorelement 20 mitgenommen, wodurch die Kontrollabschnitte 22 unter elastischer Verformung aus den Queröffnungen 24 nach innen in die Stecköffnung 6 zurückgezogen werden. In dieser Stellung werden vorteilhafterweise auch die Queröffnungen 24 nach innen durch einen Dichtabschnitt 36 verschlossen. Dadurch ist ein wirksamer Schutz gegen Eindringen von Schmutz, Feuchtigkeit und dergleichen gewährleistet. Zudem sitzt der Basisring 26 dichtend zwischen dem Aufnahmeteil 4 und dem Steckabschnitt 8. Dazu ist es zweckmäßig, wenn der Basisring 26 radial innen und/oder außen und/oder an seinem in die Stecköffnung 6 weisenden Stirnende Dichtlippen bzw. Dichtkanten 38 aufweist.

In der Ausführungsform der Erfindung ist es vorteilhaft, wenn das Indikatorelement 20 zumindest im freien Endbereich jedes Kontrollabschnittes 22 eine sich optisch vom jeweils angrenzenden Außenflächenbereich des Aufnahmeteils 4 unterscheidende Ausgestaltung aufweist, und zwar insbesondere eine gegenüber dem Aufnahmeteil 4 kontrastreiche Farbgebung (beispielsweise sogenannte Signalfarbe). Dadurch wird die optische, visuelle Erkennbarkeit der Signalstellung und der dadurch angezeigten Mindest-Steckstellung noch verbessert.

## Patentansprüche

1. Anschlußvorrichtung für eine Strömungsmittel-Leitung (2), bestehend aus einem Aufnahmeteil (4) mit einer Stecköffnung (6) zum Einstecken eines Leitungs-Steckabschnittes (8) und Haltemitteln (10) zum Arretieren des eingesteckten Steckabschnittes (8) in der Stecköffnung (6), wobei in der Stecköffnung (6) ein Indikatorelement (20) derart gelagert ist, dass beim Einstecken des Steckabschnittes (8) bei Erreichen einer bestimmten Mindest-Steckstellung, in der eine hinreichende Arretierung und Abdichtung des Steckabschnittes (8) gewährleistet sind, selbsttätig eine von außen wahrnehmbare Zustandsänderung des Indikatorelementes (20) erfolgt,
**dadurch gekennzeichnet, dass** daslndikatorelement(20)für seine Zustandsänderung von dem Steckabschnitt (8) mittelbar über ein Zwischenelement (28) betätigt wird.

2. Anschlußvorrichtung nach Anspruch 1,
**dadurch gekennzeichnet, dass** das Indikatorelement (20) durch das Einstecken des Steckabschnittes (8) verformbar ist.

3. Anschlußvorrichtung nach Anspruch 1 oder 2,
**dadurch gekennzeichnet, dass** das Indikatorelement (20) mindestens einen Kontrollabschnitt (22) aufweist, der derart beweglich in einer aus der Stecköffnung (6) etwa radial nach außen führenden Queröffnung (24) des Aufnahmeteils (4) angeordnet ist, dass er in einer ersten Stellung mit einem freien Ende die Außenkontur des Aufnahmeteils (4) nach außen überragt und in einer zweiten Stellung vollständig innerhalb der Außenkontur des Aufnahmeteils (4) liegt.

4. Anschlußvorrichtung nach Anspruch 3,
**dadurch gekennzeichnet, dass** die erste Stellung eine Ausgangsstellung vor einem Einstecken des Steckabschnittes (8) und die zweite Stellung eine die Mindest-Steckstellung anzeigende Signalstellung sind.

5. Anschlußvorrichtung nach einem der Ansprüche 3, 4,
**dadurch gekennzeichnet, dass** das Indikatorelement (20) als elastisch verformbares Ringelement mit einem innerhalb der Stecköffnung (6) gelagerten Basisring (26) und vorzugsweise mehreren sich von dem Basisring (26) weg in jeweils eine Queröffnung (24) des Aufnahmeteils (4) erstreckenden Kontrollabschnitten (22) ausgebildet ist.

6. Anschlußvorrichtung nach einem der Ansprüche 1 bis 5,
**dadurch gekennzeichnet, dass** daslndikatorelement(20)derart ausgebildet und/oder gelagert ist, dass es nach einem Lösen des Steckabschnittes (8) im Wesentlichen unverändert in seiner die Mindest-Steckstellung anzeigenden Signalstellung verbleibt.

7. Anschlußvorrichtung nach einem der Ansprüche 3 bis 6,
**dadurch gekennzeichnet, dass** das ringförmige Zwischenelement (28) in der Ausgangsstellung die Kontrollabschnitte (22) gegen eine radial nach innen gerichtete Vorspannung in ihrer ersten, nach außen ragenden Stellung hält, und dass mit dem eingesteckten Steckabschnitt (8) das Zwischenelement (28) so mitgenommen wird, dass die Kontrollabschnitte (22) freigegeben werden und sich durch ihre Vorspannung radial in ihre zweite, zurückgezogene Stellung bewegen.

8. Anschlußvorrichtung nach einem der Ansprüche 3 bis 7,
**dadurch gekennzeichnet, dass** daslndikatorelement(20)zumindest im freien Endbereich des/jedes Kontrollabschnittes (22) eine sich optisch von dem Aufnahmeteil (4) unterscheidende Ausgestaltung, insbesondere eine kontrastreiche Farbgebung aufweist.

9. Anschlußvorrichtung nach einem der Ansprüche 1 bis 8,
**dadurch gekennzeichnet, dass** das Indikatorelement (20) als Formteil aus einem elastischen Material, insbesondere Federstahl, gebildet ist.

10. Anschlußvorrichtung nach einem der Ansprüche 1 bis 9,
**dadurch gekennzeichnet, dass** der Steckabschnitt (8) von einem Ende der Leitung (2) oder von einem zusätzlichen Anschlußteil gebildet ist.

11. Anschlußvorrichtung nach einem der Ansprüche 1 bis 10,
**dadurch gekennzeichnet, dass** innerhalb des Aufnahmeteils (4) in der Stecköffnung (6) eine innere koaxiale Stützhülse (12) zum stützenden Eingriff in den eingesteckten Steckabschnitt (8) angeordnet ist.

## Claims

1. A connection device for a flowing medium line (2), consisting of a receiving part (4) with an insertion opening (6) for inserting a line insertion portion (8) and holding means (10) for locking the inserted insertion portion (8) in the insertion opening (6), an indicator element (20) being mounted in the insertion opening (6) in such a way that, when the insertion portion (8) is inserted, on reaching a certain minimum insertion position in which sufficient locking and sealing of the insertion portion (8) are ensured, a change of state of the indicator element (20) which is discernable from the exterior occurs automatically,
**characterised in that** the indicator element (20) is operated for its change of state by the insertion portion (8) indirectly via an intermediate element (28).

2. A connection device according to Claim 1,
**characterised in that** the indicator element (20) is deformable by the insertion of the insertion portion (8).

3. A connection device according to Claim 1 or 2,
**characterised in that** the indicator element (20) has at least one control portion (22) which is arranged so as to be movable in a transverse opening (24) of the receiving part (4) leading approximately radially outwardly from the insertion opening (6) in such a way that in a first position it projects with a free end outwardly beyond the exterior contour of the receiving part (4) and in a second position is located entirely within the exterior contour of the receiving part (4).

4. A connection device according to Claim 3,
**characterised in that** the first position is an initial position before insertion of the insertion portion (8) and the second position is a signal position indicating the minimum insertion position.

5. A connection device according to one of Claims 3, 4,
**characterised in that** the indicator element (20) is an elastically deformable ring element with a base ring (26) mounted within the insertion opening (6) and preferably several control portions (22) extending away from the base ring (26) into respective transverse openings (24) of the receiving part (4).

6. A connection device according to one of Claims 1 to 5,
**characterised in that** the indicator element (20) is designed and/or mounted in such a way that, after release of the insertion portion (8), it remains substantially unchanged in its signal position indicating the minimum insertion position.

7. A connection device according to one of Claims 3 to 6,
**characterised in that** the annular intermediate element (28) in the initial position holds the control portions (22) against a radially inwardly directed initial tension in their first, outwardly projecting position, and **in that** the intermediate element (28) is entrained with the inserted insertion portion (8) such that the control portions (22) are released and as a result of their initial tension move radially into their second, retracted position.

8. A connection device according to one of Claims 3 to 7,
**characterised in that** the indicator element (20) at least in the free end region of the/each control portion (22) has a design differing visually from the receiving part (4), particularly a high-contrast colouring.

9. A connection device according to one of Claims 1 to 8,
**characterised in that** the indicator element (20) is formed as a moulding from an elastic material, particularly spring steel.

10. A connection device according to one of Claims 1 to 9,
**characterised in that** the insertion portion (8) is formed by one end of the line (2) or by an additional connection part.

11. A connection device according to one of Claims 1 to 10,
**characterised in that** an internal coaxial supporting sleeve (12) is arranged within the receiving part (4) in the insertion opening (6) for the supporting engagement into the inserted insertion portion (8).

## Revendications

1. Dispositif de raccord pour une conduite pour fluide (2), se composant d'un élément de réception (4) avec un orifice d'emboîtement (6) destiné à emboîter une section de conduite (8) à emboîter et de moyens de retenue (10) destinés à arrêter la section à emboîter (8) emboîtée dans l'orifice d'emboîtement (6), un élément indicateur (20) étant logé dans l'orifice d'emboîtement (6) de telle manière que lors de l'emboîtement de la section à emboîter (8), lorsqu'une position d'emboîtement minimum, dans laquelle un arrêt et un étanchéification suffisants de la section à emboîter (8) sont garantis, est atteinte, une modification de l'élément indicateur (20) perceptible de l'extérieur a lieu automatiquement, **caractérisé en ce que** l'élément indicateur (20) est actionné indirectement par la section à emboîter (8) via un élément intermédiaire (28) pour changer d'état.

2. Dispositif de raccord selon la revendication 1,
**caractérisé en ce que** l'élément indicateur (20) peut être déformé par l'emboîtement de la section à emboîter (8).

3. Dispositif de raccord selon la revendication 1 ou 2,
**caractérisé en ce que** l'élément indicateur (20) présente au moins une section de contrôle (22), laquelle est disposée de manière mobile dans un orifice transversal (24) de l'élément de réception (4) qui mène vers l'extérieur de façon approximativement radiale à partir de l'orifice d'emboîtement (6) de telle manière qu'une extrémité libre de l'élément indicateur (20) dépasse du contour extérieur de l'élément de réception (4) vers l'extérieur dans une première position et se trouve complètement à l'intérieur du contour extérieur de l'élément de réception (4) dans une deuxième position.

4. Dispositif de raccord selon la revendication 3,
**caractérisé en ce que** la première position est une position initiale avant un emboîtement de la section à emboîter (8), et **en ce que** la deuxième position est une position de signalisation qui indique la position d'emboîtement minimum.

5. Dispositif de raccord selon l'une quelconque des revendications 3, 4,
**caractérisé en ce que** l'élément indicateur (20) est réalisé sous forme d'élément annulaire élastiquement déformable avec un anneau de base (26) logé à l'intérieur de l'orifice d'emboîtement (6) et, de préférence, avec plusieurs sections de contrôle (22) qui s'étendent de l'anneau de base (26) dans un orifice transversal (24) respectif de l'élément de réception (4).

6. Dispositif de raccord selon l'une quelconque des revendications 1 à 5,
**caractérisé en ce que** l'élément indicateur (20) est réalisé et/ou logé de telle manière qu'après que la section à emboîter (8) a été détachée, sa position de signalisation qui indique la position d'emboîtement minimum reste pour l'essentiel inchangée.

7. Dispositif de raccord selon l'une quelconque des revendications 3 à 6,
**caractérisé en ce** l'élément intermédiaire en forme d'anneau (28) maintient les sections de contrôle (22) dans leur première position, où elles dépassent vers l'extérieur, contre une précontrainte dirigée vers l'intérieur dans le sens radial, et en ce que l'élément intermédiaire (28) est entraîné avec la section à emboîter (8) emboîtée de telle manière que les sections de contrôle (22) sont dégagées et se déplacent dans le sens radial dans leur deuxième position de retrait grâce à leur précontrainte.

8. Dispositif de raccord selon l'une quelconque des revendications 3 à 7,
**caractérisé en ce que** l'élément indicateur (20) présente au moins dans la zone d'extrémité libre de la ou de chaque section de contrôle (22) une configuration qui se distingue optiquement de l'élément de réception (4), en particulier une coloration riche en contrastes.

9. Dispositif de raccord selon l'une quelconque des revendications 1 à 8,
**caractérisé en ce que** l'élément indicateur (20) est réalisé comme pièce moulée dans un matériau élastique, en particulier en acier à ressorts.

10. Dispositif de raccord selon l'une quelconque des revendications 1 à 9,
**caractérisé en ce que** la section à emboîter (8) est formée par une extrémité de la conduite (2) ou par un élément de raccord supplémentaire.

11. Dispositif de raccord selon l'une quelconque des revendications 1 à 10,
**caractérisé en ce qu'**une douille de support coaxiale intérieure (12) est disposée à l'intérieur de l'élément de réception (4) dans l'orifice d'emboîtement (6) pour entrer en prise de support avec la section à emboîter (8) emboîtée.
